# EUROPÄISCHE PATENTSCHRIFT

(11) **EP 2 569 207 B1**
(45) Veröffentlichungstag und Bekanntmachung des Hinweises auf die Patenterteilung: **24.09.2014**
(21) Anmeldenummer: 11713184.7
(22) Anmeldetag: 01.04.2011
(51) Int. Cl.: B62D 15/02

(54) **VERFAHREN ZUM EINPARKEN ODER AUSPARKEN EINES FAHRZEUGS SOWIE ENTSPRECHENDES ASSISTENZSYSTEM UND FAHRZEUG**
METHOD FOR PULLING A VEHICLE INTO OR OUT OF A PARKING SPACE AND CORRESPONDING ASSISTANCE SYSTEM AND VEHICLE
PROCÉDÉ PERMETTANT DE GARER UN VÉHICULE OU DE LE SORTIR D'UNE PLACE DE STATIONNEMENT AINSI QUE SYSTÈME D'ASSISTANCE ASSOCIÉ ET VÉHICULE

(30) Priorität: 12.05.2010 DE 102010020208
(43) Veröffentlichungstag der Anmeldung: 20.03.2013
(73) Patentinhaber: Volkswagen Aktiengesellschaft, 38436 Wolfsburg (DE)
(72) Erfinder: WUTTKE, Ulrich, 38126 Braunschweig (DE); HÜGER, Philipp, 38471 Rühen (DE); TERKES, Mehmet, 38102 Braunschweig (DE)
(86) Internationale Anmeldenummer: PCT/EP2011/001660
(87) Internationale Veröffentlichungsnummer: WO 2011/141099

(56) Entgegenhaltungen:
- US-A1- 2002 128 754
- US-A1- 2005 285 758

## Beschreibung

Die vorliegende Erfindung betrifft ein Verfahren, um ein Fahrzeug automatisch in eine Parklücke ein- oder aus einer Parklücke auszuparken. Darüber hinaus betrifft die vorliegende Erfindung ein entsprechend ausgestaltetes Assistenzsystem und ein entsprechend ausgestaltetes Fahrzeug.

Die US 2005/0285758 A1 offenbart ein Parkassistenzsystem gemäß dem Oberbegriff des Anspuchs 6.

Nach dem Stand der Technik sind zum einen Systeme zum (semi-) automatischen Ein- oder Ausparken eines Fahrzeugs und zum anderen Systeme bekannt, welche einen Fahrer bei einem Parkvorgang meist in akustischer Form vor einem Hindernis warnen. Obwohl beispielsweise die DE 10 2006 058 885 A1 oder die DE 10 2004 010 752 A1 Verbesserungen für die letztgenannten Systeme offenbaren, tritt nach dem Stand der Technik das Problem auf, dass beispielsweise bei einem (semi-) automatischen Einparken unnötigerweise vor einem Zusammenstoß mit einem Hindernis gewarnt wird.

Die vorliegende Erfindung stellt sich die Aufgabe, dieses Problem nach dem Stand der Technik zumindest abzumildern.

Erfindungsgemäß wird diese Aufgabe durch ein Verfahren zum Einparken oder Ausparken eines Fahrzeugs nach Anspruch 1, durch ein Assistenzsystem nach Anspruch 6 und durch ein Fahrzeug nach Anspruch 8 gelöst. Die abhängigen Ansprüche definieren bevorzugte und vorteilhafte Ausführungsformen der vorliegenden Erfindung.

Im Rahmen der vorliegenden Erfindung wird ein Verfahren zum Einparken oder Ausparken eines Fahrzeugs unter Verwendung eines Assistenzsystems bereitgestellt. Dabei wird automatisch eine Parklücke, in welcher sich das Fahrzeug befindet oder in welche das Fahrzeug eingeparkt werden soll, vermessen, um die Abmessungen der Parklücke zu ermitteln. Während eines Einparkvörgangs oder Ausparkvorgangs des Assistenzsystems wird ständig automatisch ein Abstand zwischen dem Fahrzeug und Hindernissen in der Umgebung des Fahrzeugs mit Sensoren, beispielsweise mittels Ultraschallsensoren, erfasst und ein Hinweis erzeugt, wenn der Abstand unterhalb eines vorgegebenen Schwellenwerts liegt. Dabei wird der Schwellenwert in Abhängigkeit von den Abmessungen des Fahrzeugs und von den vorab erfassten Abmessungen der Parklücke eingestellt.

Indem der Schwellenwert abhängig von den Abmessungen des Fahrzeugs und der Parklücke eingestellt wird, können die Bedingungen, unter welchen ein Hinweis vor einem Zusammenstoß mit einem Hindernis erzeugt wird, vorteilhafterweise an die Gegebenheiten der Parklücke angepasst werden. Der Hinweis vor einem Zusammenstoß kann dabei akustischer Natur, optischer Natur (z.B. ein Fortschrittbalken) oder haptischer Natur (Vibration des Lenkrads) sein.

Beispielsweise kann der Schwellenwert umso kleiner eingestellt werden, je geringer der Unterschied zwischen den Abmessungen der Parklücke und den Abmessungen des Fahrzeugs ist. Dabei wird bei dem Vergleich der Abmessungen insbesondere die Differenz zwischen der Länge der Parklücke und der Länge des Fahrzeugs ermittelt und der Schwellenwert umso kleiner eingestellt, je geringer diese Differenz ist.

Dadurch ist es vorteilhafterweise möglich, dass z.B. ein Dauertonsignal, mit welchem der Fahrer vor einem Zusammenstoß mit einem Hindernis gewarnt wird, bei kleineren Parklücken erst bei einem geringeren Abstand des Fahrzeugs von dem entsprechenden Hindernis ertönt, als es bei größeren Parklücken der Fall ist.

Gemäß einer bevorzugten erfindungsgemäßen Ausführungsform wird der Schwellenwert nur dann abhängig von den Abmessungen des Fahrzeugs und der Parklücke eingestellt, wenn beim (semi-) automatischen Einparken des Fahrzeugs folgende Bedingungen erfüllt sind:
- Beim Vermessen der Parklücke wurde erkannt, dass die Parklücke ausreichend groß für das Fahrzeug ist, um (semi-) automatisch in die Parklücke einparken zu können.
- Das Assistenzsystem wurde beispielsweise von dem Fahrer zum Einparken in die Parklücke aktiviert.
- Der Rückwärtsgang des Fahrzeugs ist eingelegt. Beim ersten Zug beim Einparken fährt das Fahrzeug in der Regel rückwärts.
- Ein Lenkeingriff des Assistenzsystems in eine Lenkung des Fahrzeugs ist aktiv, d.h. die Ansteuerung der Lenkung erfolgt durch das Assistenzsystem.

Wenn die vorab beschriebenen Bedingungen erfüllt sind, ist sichergestellt, dass sich das Fahrzeug in einem (semi-) automatischen Einparkvorgang befindet, in welchem die Querführung oder Lenkung des Fahrzeugs von dem Assistenzsystem und die Längsführung (d.h. Bremsen, Beschleunigen, Gangwechseln) des Fahrzeugs von dem Fahrer durchgeführt wird. Nur wenn sich das Fahrzeug in einem (semi-) automatischen Einparkvorgang befindet, wird gemäß dieser Ausführungsform der Schwellenwert verändert, was meist mit einer Verringerung des Schwellenwerts einhergeht.

Gemäß einer weiteren bevorzugten erfindungsgemäßen Ausführungsform wird der Schwellenwert nur dann abhängig von den Abmessungen des Fahrzeugs und der Parklücke eingestellt, wenn beim (semi-) automatischen Ausparken des Fahrzeugs folgende Bedingungen erfüllt sind:
- Die Parklücke, aus welcher das Fahrzeug ausparken will, ist vermessen worden. D.h. die Abmessungen der Parklücke sind bekannt.
- Das Assistenzsystem wurde beispielsweise von dem Fahrer zum Ausparken aus der Parklücke aktiviert.
- Der Rückwärtsgang oder ein Vorwärtsgang des Fahrzeugs ist eingelegt.
- Ein Fahrtrichtungsanzeiger (Blinker) des Fahrzeugs ist gesetzt. Beim Ausparken muss nach den Verkehrsregeln der Blinker betätigt sein. Diese Bedingung kann z.B. in Ländern, in denen die Verkehrsregeln nicht so streng sind, entfallen.
- Ein Lenkeingriff des Assistenzsystems in eine Lenkung des Fahrzeugs ist aktiv, d.h. die Ansteuerung der Lenkung erfolgt durch das Assistenzsystem.

Wenn die vorab beschriebenen Bedingungen erfüllt sind, ist gewährleistet, dass sich das Fahrzeug in einem (semi-) automatischen Ausparkvorgang befindet, in welchem die Querführung des Fahrzeugs von dem Assistenzsystem und die Längsführung des Fahrzeugs von dem Fahrer durchgeführt wird. Nur wenn sich das Fahrzeug in einem (semi-) automatischen Ausparkvorgang befindet, wird gemäß dieser Ausführungsform der Schwellenwert an die Größe der Parklücke angepasst, was insbesondere bedeutet, dass der Dauertonbereich bei kleineren Parklücken erst bei einem geringeren Abstand des Fahrzeugs zu einem Hindernis auftritt.

Im Rahmen der vorliegenden Erfindung wird auch ein Assistenzsystem für ein Fahrzeug bereitgestellt. Dabei umfasst das Assistenzsystem eine Vorrichtung zur Erzeugung eines Hinweises, eine Steuerung und einen oder mehrere Abstandsmesssensoren. Der eine oder die mehreren Abstandsmesssensoren sind zur Erfassung von Abmessungen einer Parklücke, in welcher sich das Fahrzeug befindet oder in welche das Fahrzeug einparken will, und zur Erfassung eines Abstands zwischen dem Fahrzeug und einem Hindernis in der Umgebung des Fahrzeugs ausgestaltet. Das Assistenzsystem erzeugt mit Hilfe der Vorrichtung, beispielsweise Lautsprechern des Fahrzeugs, den Hinweis, wenn das Assistenzsystem mit Hilfe des oder der Abstandsmesssensoren erfasst, dass der Abstand des Fahrzeugs zu einem Hindernis unterhalb eines vorbestimmten Schwellenwerts liegt. Dabei passt das Assistenzsystem bei einem (semi-) automatischen Einparkvorgang oder Ausparkvorgang den Schwellenwert mit Hilfe der Steuerung an die Abmessungen des Fahrzeugs und an die Abmessungen der Parklücke, insbesondere an eine Differenz dieser Abmessungen, an.

Die Vorteile des erfindungsgemäßen Assistenzsystems entsprechen im Wesentlichen den Vorteilen des erfindungsgemäßen Verfahrens, welche vorab im Detail ausgeführt worden sind, so dass hier auf eine Wiederholung verzichtet wird.

Schließlich wird im Rahmen der vorliegenden Erfindung ein Fahrzeug bereitgestellt, welches ein erfindungsgemäßes Assistenzsystem umfasst.

Die vorliegende Erfindung ist insbesondere für Kraftfahrzeuge geeignet, welche mit einem Assistenzsystem zum (semi-) automatischen Einparken oder Ausparken ausgestaltet sind. Selbstverständlich ist die vorliegende Erfindung nicht auf diesen bevorzugten Anwendungsbereich eingeschränkt, da die vorliegende Erfindung prinzipiell auch bei Kraftfahrzeugen eingesetzt werden kann, welche kein Assistenzsystem zum (semi-) automatischen Einparken oder Ausparken aufweisen und bei welchen der Fahrer den Parkvorgang noch vollständig manuell durchführt. Darüber hinaus ist die vorliegende Erfindung auch für Schiffe, Flugzeuge oder gleisgebundene oder spurgeführte Fahrzeuge einsetzbar.

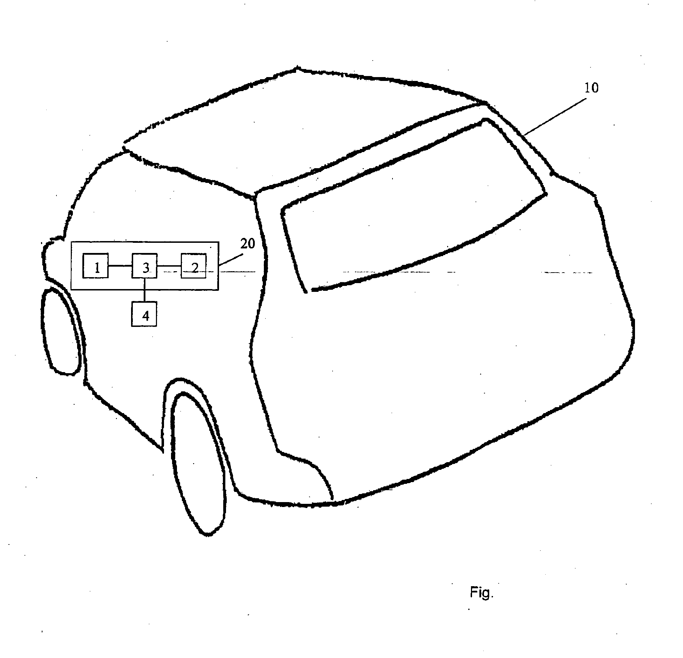

Im Folgenden wird die vorliegende Erfindung anhand erfindungsgemäßer Ausführungsformen mit Bezug zu der einzigen Figur im Detail erläutert.

Die einzige Figur stellt schematisch ein erfindungsgemäßes Fahrzeug mit einem erfindungsgemäßen Assistenzsystem dar.

In der einzigen Figur ist schematisch ein erfindungsgemäßes Fahrzeug 10 dargestellt, welches ein erfindungsgemäßes Assistenzsystem 20 und eine Lenkung 4 umfasst. Das Assistenzsystem 20 umfasst seinerseits mehrere Ultraschallsensoren 1, eine Steuerung 3 und Lautsprecher 2. Mit Hilfe der Ultraschallsensoren 1 Vermisst das Assistenzsystem 20 eine Parklücke, in welcher sich das Fahrzeug 10 befindet oder in welche das Fahrzeug 10 einparken wird. Darüber hinaus bestimmt das Assistenzsystem 20 mit den Ultraschallsensoren 1 einen Abstand zwischen dem Fahrzeug 10 und etwaigen Hindernissen im näheren Umfeld des Fahrzeugs 10. Sollte dieser Abstand unterhalb eines vorbestimmten und erfindungsgemäß änderbaren Schwellenwerts liegen, erzeugt das Assistenzsystem 20 mit Hilfe der Steuerung 3 und den Lautsprechern 2 einen akustischen Hinweis (z.B. einen Dauerton) für den Fahrer des Fahrzeugs 10, welcher disen darüber informiert, dass ein Zusammenstoß des Fahrzeugs 10 mit dem Hindernis unmittelbar bevorsteht.

Das Assistenzsystem 20 ist auch in der Lage, einen (semi-) automatischen Einparkvorgang oder Ausparkvorgang durchzuführen, bei welchem die Steuerung 3 in die Lenkung 4 des Fahrzeugs 10 eingreift. Bei einem solchen Einparkvorgang oder Ausparkvorgang passt das Assistenzsystem 20 den Schwellenwert in Abhängigkeit von den Abmessungen der Parklücke und von den Abmessungen des Fahrzeugs 10 an. Beispielsweise kann der Schwellenwert auf 30 cm eingestellt werden, wenn die Differenz zwischen der Längenabmessung bzw. der Länge der Parklücke und der Fahrzeuglänge größer als 1 m ist, so dass der Dauerton ertönt, wenn sich das Fahrzeug 10 näher als 30 cm an einem Hindernis befindet. Wenn die Differenz zwischen der Länge der Parklücke und der Fahrzeuglänge kleiner als 1 m ist, kann der Schwellenwert beispielsweise auf 20 cm eingeschränkt werden, so dass der Dauerton erst dann ertönt, wenn sich das Fahrzeug 10 näher als 20 cm an einem Hindernis befindet. Dadurch ist es vorteilhafterweise möglich, dass das Assistenzsystem 20 einen (semi-) automatischen Einparkvorgang oder Ausparkvorgang auch bei kleinen Parklücken durchführt, ohne dass der Dauerton ertönt.

## Patentansprüche

1. Verfahren zum Einparken oder Ausparken eines Fahrzeugs (10) unter Verwendung eines Assistenzsystems (20),
wobei von dem Assistenzsystem (20) Abmessungen einer Parklücke, in welcher sich das Fahrzeug (10) befindet oder in welche das Fahrzeug (10) einparken wird, bestimmt werden, wobei von dem Assistenzsystem (20) ein Abstand zwischen dem Fahrzeug (10) und einem Hindernis erfasst wird,
**dadurch gekennzeichnet,**
**dass** von dem Assistenzsystem (20) ein Hinweis erzeugt wird, wenn der Abstand unterhalb eines Schwellenwerts liegt, und
**dass** von dem Assistenzsystem (20) der Schwellenwert abhängig von Abmessungen des Fahrzeugs (10) und von den Abmessungen der Parklücke bei einem Einparkvorgang oder einem Ausparkvorgang des Assistenzsystems (20) eingestellt wird.

2. Verfahren nach Anspruch 1, **dadurch gekennzeichnet, dass** der Schwellenwert umso kleiner eingestellt wird, je geringer der Unterschied zwischen den Abmessungen der Parklücke und den Abmessungen des Fahrzeugs (10) ist.

3. Verfahren nach Anspruch 1 oder 2, **dadurch gekennzeichnet, dass** der Schwellenwert abhängig von einer Differenz zwischen der Länge der Parklücke und der Länge des Fahrzeugs (10) eingestellt wird.

4. Verfahren nach einem der vorhergehenden Ansprüche,
**dadurch gekennzeichnet,**
**dass** der Schwellenwert abhängig von den Abmessungen des Fahrzeugs (10) und von den Abmessungen der Parklücke beim Einparken eingestellt wird, wenn folgende Bedingungen erfüllt sind:
• die für das Fahrzeug (10) ausreichend große Parklücke ist vermessen worden,
• das Assistenzsystem (20) ist aktiviert,
• ein Rückwärtsgang des Fahrzeugs (10) ist eingelegt, und
• ein Lenkeingriff des Assistenzsystems (20) in eine Lenkung (4) des Fahrzeugs (10) ist aktiv.

5. Verfahren nach einem der vorhergehenden Ansprüche,
**dadurch gekennzeichnet,**
**dass** der Schwellenwert abhängig von den Abmessungen des Fahrzeugs (10) und von den Abmessungen der Parklücke beim Ausparken eingestellt wird, wenn folgende Bedingungen erfüllt sind:
• die Parklücke, in welcher sich das Fahrzeug (10) befindet, ist vermessen worden,
• das Assistenzsystem (20) ist aktiviert,
• ein Gang des Fahrzeugs (10) ist eingelegt,
• ein Fahrtrichtungsanzeiger des Fahrzeugs (10) ist aktiviert, und
• ein Lenkeingriff des Assistenzsystems (20) in eine Lenkung (4) des Fahrzeugs (10) ist aktiv.

6. Assistenzsystem für ein Fahrzeug (10),
wobei das Assistenzsystem (20) eine Vorrichtung (2) zur Erzeugung eines Hinweises, eine Steuerung (3) und mindestens einen Abstandsmesssensor (1) umfasst,
wobei der mindestens eine Abstandsmesssensor (1) zur Bestimmung von Abmessungen einer Parklücke, in welcher sich das Fahrzeug (10) befindet oder in welche das Fahrzeug (10) einparken wird, und zur Bestimmung eines Abstands zwischen dem Fahrzeug (10) und . einem Hindernis ausgestaltet ist,
**dadurch gekennzeichnet,**
**dass** das Assistenzsystem (20) derart ausgestaltet ist, dass das Assistenzsystem (20) den Hinweis mittels der Vorrichtung (2) erzeugt, wenn das Assistenzsystem (20) mittels des mindestens einen Abstandsmesssensors (1) erfasst, dass der Abstand unterhalb eines Schwellenwerts liegt, und dass das Assistenzsystem (20) bei einem Einparkvorgang oder Ausparkvorgang des Assistenzsystems (20) den Schwellenwert mittels der Steuerung (3) abhängig von den Abmessungen des Fahrzeugs (10) und von den Abmessungen der Parklücke einstellt.

7. Assistenzsystem nach Anspruch 6, **dadurch gekennzeichnet, dass** das Assistenzsystem (20) zur Durchführung des Verfahrens nach einem der Ansprüche 1-5 ausgestaltet ist.

8. Fahrzeug mit einem Assistenzsystem (20) nach Anspruch 5 oder 6.

## Claims

1. Method for pulling a vehicle (10) into or out of a parking space using an assistance system (20),
wherein dimensions of a parking space in which the vehicle (10) is located or into which the vehicle (10) will be pulled are determined by the assistance system (20), wherein a distance between the vehicle (10) and an obstacle is sensed by the assistance system (20),
**characterized**
**in that** the assistance system (20) produces a message if the distance is below a threshold value, and
**in that** the threshold value is set by the assistance system (20) as a function of dimensions of the vehicle (10) and of the dimensions of the parking space during a parking process or a parking-space-exiting process of the assistance system (20).

2. Method according to Claim 1, **characterized in that** the threshold value is set to a lower value the smaller the difference between the dimensions of the parking space and the dimensions of the vehicle (10).

3. Method according to Claim 1 or 2, **characterized in that** the threshold value is set as a function of a difference between the length of the parking space and the length of the vehicle (10).

4. Method according to one of the preceding claims, **characterized**
**in that** the threshold value is set as a function of the dimensions of the vehicle (10) and of the dimensions of the parking space during pulling in if the following conditions are met:
• the parking space which is sufficiently large for the vehicle (10) has been measured,
• the assistance system (20) is activated,
• a reverse gear speed of the vehicle (10) is engaged, and
• a steering intervention of the assistance system (20) into a steering system (4) of the vehicle (10) is active.

5. Method according to one of the preceding claims, **characterized**
**in that** the threshold value is set as a function of the dimensions of the vehicle (10) and of the dimensions of the parking space during pulling out if the following conditions are met:
• the parking space in which the vehicle (10) is located has been measured,
• the assistance system (20) is activated,
• a gear speed of the vehicle (10) is engaged,
• a travel direction indicator of the vehicle (10) is activated, and
• a steering intervention of the assistance system (20) into a steering system (4) of the vehicle (10) is active.

6. Assistance system for a vehicle (10),
wherein the assistance system (20) comprises a device (2) for producing a message, a controller (3) and at least one distance-measuring sensor (1),
wherein the at least one distance-measuring sensor (1) is configured to determine dimensions of a parking space in which the vehicle (10) is located or into which the vehicle (10) will be pulled, and to determine a distance between the vehicle (10) and an obstacle,
**characterized**
**in that** the assistance system (20) is configured in such a way that the assistance system (20) produces the message by means of the device (2) if the assistance system (20) senses by means of the at least one distance-measuring sensor (1) that the distance is below a threshold value, and in that the assistance system (20) sets the threshold value by means of the controller (3) during a parking process or parking-space-exiting process of the assistance system (20) as a function of the dimensions of the vehicle (10) and of the dimensions of the parking space.

7. Assistance system according to Claim 6, **characterized in that** the assistance system (20) is configured to carry out the method according to one of Claims 1-5.

8. Vehicle having an assistance system (20) according to Claim 5 or 6.

## Revendications

1. Procédé d'entrée en stationnement ou de sortie de stationnement d'un véhicule (10) en utilisant un système d'assistance (20),
les dimensions d'un emplacement de stationnement dans lequel se trouve le véhicule (10) ou dans lequel le véhicule (10) va entrer en stationnement étant déterminées par le système d'assistance (20),
un écart entre le véhicule (10) et un obstacle étant détecté par le système d'assistance (20),
**caractérisé en ce**
**que** le système d'assistance (20) génère une notification lorsque l'écart est inférieur à une valeur de seuil, et
**que** le système d'assistance (20) règle la valeur de seuil en fonction des dimensions du véhicule (10) et des dimensions de l'emplacement de stationnement lors d'une manoeuvre d'entrée en stationnement ou d'une manoeuvre de sortie de stationnement du système d'assistance (20).

2. Procédé selon la revendication 1, **caractérisé en ce que** la valeur de seuil est réglée de manière à être d'autant plus basse que la différence entre les dimensions de l'emplacement de stationnement et les dimensions du véhicule (10) est faible.

3. Procédé selon la revendication 1 ou 2, **caractérisé en ce que** la valeur de seuil est réglée en fonction d'une différence entre la longueur de l'emplacement de stationnement et la longueur du véhicule (10).

4. Procédé selon l'une des revendications précédentes, **caractérisé en ce**
**que** la valeur de seuil est réglée en fonction des dimensions du véhicule (10) et des dimensions de l'emplacement de stationnement lors de l'entrée en stationnement lorsque les conditions suivantes sont remplies :
* l'emplacement de stationnement suffisamment grand pour le véhicule (10) a été mesuré,
* le système d'assistance (20) est activé,
* un rapport de marche arrière du véhicule (10) est engagé, et
* une intervention de guidage du système d'assistance (20) dans une direction (4) du véhicule (10) est active.

5. Procédé selon l'une des revendications précédentes, **caractérisé en ce**
**que** la valeur de seuil est réglée en fonction des dimensions du véhicule (10) et des dimensions de l'emplacement de stationnement lors de la sortie de stationnement lorsque les conditions suivantes sont remplies :
* l'emplacement de stationnement dans lequel se trouve le véhicule (10) a été mesuré,
* le système d'assistance (20) est activé,
* un rapport du véhicule (10) est engagé,
* un indicateur de sens de déplacement du véhicule (10) est activé, et
* une intervention de guidage du système d'assistance (20) dans une direction (4) du véhicule (10) est active.

6. Système d'assistance pour un véhicule (10),
le système d'assistance (20) comprenant un dispositif (2) pour générer une notification, une commande (3) et au moins un détecteur de mesure d'écart (1),
l'au moins un détecteur de mesure d'écart (1) étant configuré pour déterminer les dimensions d'un emplacement de stationnement dans lequel se trouve le véhicule (10) ou dans lequel le véhicule (10) va entrer en stationnement et pour déterminer un écart entre le véhicule (10) et un obstacle,
**caractérisé en ce**
**que** le système d'assistance (20) est configuré de telle sorte que le système d'assistance (20) génère la notification au moyen du dispositif (2) lorsque le système d'assistance (20) détecte, à l'aide de l'au moins un détecteur de mesure d'écart (1), que l'écart est inférieur à une valeur de seuil, et en ce que le système d'assistance (20), lors d'une manoeuvre d'entrée en stationnement ou d'une manoeuvre de sortie de stationnement du système d'assistance (20), règle la valeur de seuil à l'aide de la commande (3) en fonction des dimensions du véhicule (10) et des dimensions de l'emplacement de stationnement.

7. Système d'assistance selon la revendication 6, **caractérisé en ce que** le système d'assistance (20) est configuré pour mettre en oeuvre le procédé selon l'une des revendications 1 à 5.

8. Véhicule équipé d'un système d'assistance (20) selon la revendication 5 ou 6.
